(19) Europäisches Patentamt
European Patent Office
Office européen des brevets

(11) **EP 1 273 146 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(51) Int Cl.:
*H04L 27/26* (2006.01)   *H04L 25/03* (2006.01)

(21) Anmeldenummer: **01931442.6**

(22) Anmeldetag: **12.04.2001**

(86) Internationale Anmeldenummer:
**PCT/DE2001/001441**

(87) Internationale Veröffentlichungsnummer:
**WO 2001/078340 (18.10.2001 Gazette 2001/42)**

(54) **VERFAHREN ZUR BESTIMMUNG DER FILTERKOEFFIZIENTEN EINES DIGITALEN ZEITBEREICHSENTZERRERS FÜR EIN MULTITRÄGERFREQUENZSIGNAL**

METHOD FOR DETERMINING THE FILTER COEFFICIENTS OF A DIGITAL TIME DOMAIN EQUALISER FOR A MULTICARRIER FREQUENCY SIGNAL

PROCEDE PERMETTANT DE DETERMINER LE COEFFICIENT DE FILTRE D'UN EGALISEUR NUMERIQUE DANS LE DOMAINE TEMPOREL POUR UN SIGNAL A FREQUENCES PORTEUSES MULTIPLES

(84) Benannte Vertragsstaaten:
**DE ES FR GB IT**

(30) Priorität: **12.04.2000 DE 10018133**

(43) Veröffentlichungstag der Anmeldung:
**08.01.2003 Patentblatt 2003/02**

(73) Patentinhaber: **Siemens Aktiengesellschaft 80333 München (DE)**

(72) Erfinder:
• **BLINN, Thomas 66894 Käshofen (DE)**
• **KOZEK, Werner 1220 Wien (AT)**

(56) Entgegenhaltungen:
**EP-A- 0 946 025    US-A- 5 461 640**

• **HENKEL W ET AL: "Maximizing the channel capacity of multicarrier transmission by suitable adaptation of the time-domain equalizer" IEEE TRANSACTIONS ON COMMUNICATIONS, Bd. 48, Nr. 12, Dezember 2000 (2000-12), Seiten 2000-2004, XP002172319 New York, USA ISSN: 0090-6778 in der Anmeldung erwähnt**
• **HLAWATSCH F ET AL: "TIME-FREQUENCY PROJECTION FILTERS AND TIME-FREQUENCY SIGNAL EXPANSIONS" IEEE TRANSACTIONS ON SIGNAL PROCESSING, Bd. 42, Nr. 12, 1. Dezember 1994 (1994-12-01), Seiten 3321-3334, XP000495025 New York, USA ISSN: 1053-587X**
• **AL-DHAHIR N ET AL: "OPTIMUM FINITE-LENGTH EQUALIZATION FOR MULTICARRIER TRANSCEIVERS" IEEE TRANSACTIONS ON COMMUNICATIONS,US,IEEE INC. NEW YORK, Bd. 44, Nr. 1, 1996, Seiten 56-64, XP000549644 ISSN: 0090-6778 in der Anmeldung erwähnt**
• **BLADEL VAN M ET AL: "TIME-DOMAIN EQUALIZATION FOR MULTICARRIER COMMUNICATION" IEEE GLOBAL TELECOMMUNICATIONS CONFERENCE (GLOBECOM),US,NEW YORK, IEEE, 14. November 1995 (1995-11-14), Seiten 167-171, XP000773405 ISBN: 0-7803-2510-9 in der Anmeldung erwähnt**

**Beschreibung**

Für die Übertragung von Informationen mit hohen Übertragungsgeschwindigkeiten werden in zunehmendem Maße Multiträgerübertragungsverfahren eingesetzt. Bekannte Verfahren sind beispielsweise das OFDM (Orthogonal Frequency Division Multiplexing) - Übertragungsverfahren und das DMT (Discrete Multitone) - Übertragungsverfahren. Beide Verfahren basieren auf der impliziten Synthese des Multiträgersignals durch schnelle Fouriertransformation und auf der Verwendung eines zyklischen Schutzintervalls. Dieses zyklische Zeitintervall, in der Fachwelt als Prefix bezeichnet, wird zwischen benachbarte Übertragungssignalblöcke eingefügt und enthält eine vorgegebene Anzahl von Abtastwerten des vorhergehenden Übertragungssignalblocks. Die Verwendung eines Prefix ermöglicht eine effiziente Frequenzbereichsentzerrung, sofern die Impulsantwort des equivalenten, zeitdiskreten Übertragungskanals kürzer als die Länge des Prefix ist. Längere Impulsantworten erfordern die zusätzliche Anwendung eines Zeitbereichsentzerrers. Ein Zeitbereichsentzerrer wird unmittelbar auf die Abtastwerte eines in einem Empfänger ankommenden Übertragungssignals angewendet. Eine übliche Struktur eines Empfängers und eines Senders ist beispielsweise in IEEE 1996, S. 56-64, "Optimum Finite-Length Equalization for Multicarrier Transceiver", Al-Dhahir, beschrieben. Bei bestimmten Anwendungen - beispielsweise in der xDSL-Übertragungstechnik (x Digital Subscriber Line) oder der Übertragungstechnik über Stromversorgungsleitungen (Power Line Communication) - ist eine bidirektionale koordinierte Einmessphase möglich, bei der ein Schätzwert der Kanalimpulsantwort ermittelt werden kann. Dieser Schätzwert erlaubt die Adaption des Zeitbereichsentzerrers.

Aus der Druckschrift IEEE 1995, Van Bladel und Moeneclay; Seite 167 bis 171, " Time-Domain Equalizer for Multicarrier Communication" ist bereits ein Zeitbereichsentzerrer bekannt, bei dem aus einer Kanalimpulsanwort mit Hilfe eines Substitutionssystems - d.h. einem diskreten Equalizermodell - die Koeffizienten für den Zeitbereichsentzerrer ermittelt werden. Die Berechnung läuft auf ein Eigenwertproblem hinaus, welches auf eine geeignet definierte Korrelationsmatrix bezogen ist. Ein Nachteil dieser Methode besteht darin, dass ein abstraktes, mittleres Signal/Rauschverhältnis optimiert wird, welches nicht zu einer optimalen Rate bzw. einer minimalen Bitfehlerwahrscheinlichkeit führt. Eine derartige Optimierung bzw. Ermittlung der Filterkoeffizienten ist in Henkel und Kessler, "Maximizing the Channel Capacity of Multicarrier Transmission by a Suitable Adaption Procedure for Time Domain Equalizer", Deutsche Telekom, vorgeschlagen. Hierbei ist eine globale Optimierung in einem Vektorraum, dessen Dimension gleich der Länge des zu adaptierenden Transversalfilters ist typisch k=32-64 vorgesehen. Die unvermeidliche Grösse des Vektorraums führt einerseits zu einem erheblichen numerischen Aufwand, d.h. eine hohe Rechnerleistung, und andererseits zu Instabilitäten der Optimierungsprozedur, die zu einer Reduzierung der erreichbaren Datenübertragungsrate führen kann.

In der europäischen Offenlegungsschrift EP 0 946 025 A2 wird ein Verfahren zur Signal-Equalization beschrieben. In einem Datenübertragungssystem wird zur Optimierung eines Equalizer ein Signal übertragen, das über einen gestörten Kanal übertragen wird, bei dem das Verfahren die Berechung einer maximalen Projektion eines Unterraums von einem Vektorraum über einen anderen Unterraum dieses Vectorraums beinhaltet.

Die der Erfindung zugrundeliegende Aufgabe besteht darin, die Ermittlung der Koeffizienten für Zeitbereichsentzerrer zu verbessern. Die Aufgabe wird durch die Merkmale der unabhängigen Patentansprüche gelöst.

Der wesentliche Aspekt des erfindungsgemäßen Verfahrens besteht darin, dass basierend auf einer ermittelten Impulsantwort mit Hilfe eines Vektorraum-Optimierungsverfahrens ein alle Filterkoeffizienten für unterschiedliche Störsignale umfassender Vektorunterraum durch eine orthogonale Basis (e) dargestellt wird und in Abhängigkeit von dem aktuell geschätzten Störsignal die Koeffizienten ermittelt werden, welche die optimalen Filterkoeffezienten als Element des Vektor unterraums definieren. Ein wesentlicher Vorteil des erfindungsgemäßen Verfahrens ist darin zu sehen, daß bei einer Aufteilung in Vektorunterräume zu Beginn einer Datenübertragung der numerische Aufwand, d.h. der Rechneraufwand, für die Ermittlung der Filterkoeffizienten während der Datenübertragung erheblich reduziert werden kann. Dies ist möglich, da die Dimension eines geeigneten Vektorunterraums - beispielsweise d=2-4 - erheblich kleiner ist als die Dimension des vollständigen Vektorraums - beispielsweise d=32-64. Des weiteren wird durch die Aufteilung des Vektorraums in Vektorunterräume ein robusteres Verhalten gegenüber Störeinflussen erreicht.

Die Ermittlung des Vektorunterraums wird zu Beginn einer Datenübertragung im Rahmen einer Initialisierungsprozedur durchgeführt und während einer Datenübertragung werden die Filterkoeffizienten als Element des Vektorunterraums nachjustiert. Hierdurch ist der Rechenaufwand zu Beginn einer Datenübertragung auf die Ermittlung des Vektorunterraums fokussiert und während der Datenübertragung wesentlich verringert, wodurch eine Berechnung der Filterkoeffizienten während der Datenübertragung auch für hohe Übertragungsgeschwindigkeiten möglich wird.

Gemäß einer vorteilhaften Weiterbildung des erfindungsgemäßen Verfahrens werden die Filterkoeffizienten aus dem Vektorunterraum durch ein nichtlineares Optimierungsverfahren ermittelt, wobei für die nichtlineare Optimierung das Signal/ Rauschverhältnis für jede Trägerfrequenz bestimmt wird - Anspruch 2. Hierbei wird das nichtlineare Optimierungsverfahren während der Initialisierungsprozedur auf eine Maximierung der Übertragungsgeschwindigkeit und nach der Initialisierungsprozedur auf ein maximales Signal/Rauschverhältnis abgestimmt - Anspruch 3. Dies bedeutet, daß nach der Bestimmung des Vektorunterraums unter Berücksichtigung der maximalen Übertragungsgeschwindigkeit als wesentliche Randbedingung das Signal/Rauschleistungsverhältnis in das nichtlineare Optimierungverfahren einbezogen ist.

Der lineare Vektorunterraum ist als eine Lösung eines Teil-Eigenproblems des Vektorraums bestimmt, wobei der eine Lösung des Teil-Eigenproblems repräsentierende Eigenvektorunterraum durch ein orthogonales Iterationsverfahren berechnet wird - Anspruch 4. Als Iterationsverfahren für nichtlineare Optimierungsverfahren sind unterschiedliche Verfahren bekannt und einsetzbar.

Im folgenden wird das erfindungsgemäße Verfahren anhand von drei Zeichnungen näher erläutert. Dabei zeigen

Fig. 1    in einem Blockschaltbild die Struktur eines nach dem OFDM-Verfahren wirkenden Transceivers,

Fig. 2    die Impulsantwort des Übertragungskanals, und

Fig. 3    die Funktionstruktur einer Koeffizienten-Adaption.

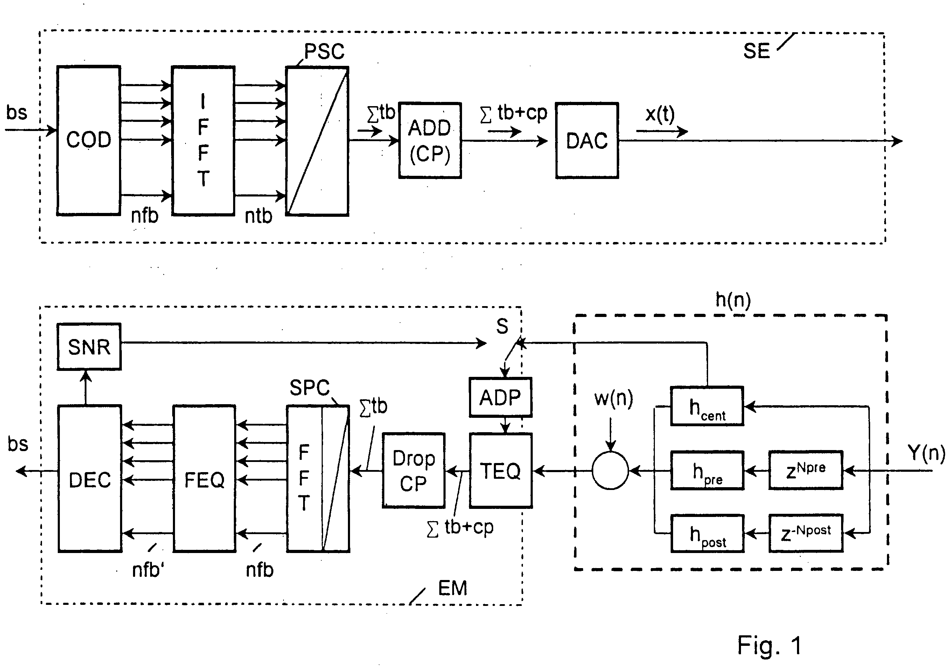

Fig. 1 zeigt die Struktur eines durch einen Sendezweig SE und einen Empfangszweig EM - jeweils durch ein strichpunktiertes Rechteck angedeutet - gebildeten Transceivers für ein Multiträgerfrequenzsignal. Ein derartiges Multiträgersignal wird bei dem OFDM (Orthogonal Frequency Division Multiplex)-Übertragungsverfahren eingesetzt. Hierbei wird ein zu sendender Bitstrom bs in einem Codierer COD blockweise gespeichert und die einzelnen Bits eines Blocks werden optimal an die n Trägerfrequenzen bzw. n Subkanäle verteilt. Die verteilten Bits der n Subkanäle werden mit Hilfe des Codierers COD auf n komplexe Subsymbole nfb abgebildet - Frequenzbereich. Die n komplexen Subsymbole nfb werden anschließend durch eine inverse Fourier Transformation (Inverse Fast Fourier Transform) - meist realisiert durch einen integrierten Schaltkreis IFFT - in n reele Abtastwerte ntb - diskreter Zeitbereich - transformiert und durch einen Parallel-Serien-Wandler PSC in ein serielles Format, einen Übertragungsblock Σtb bildend, konvertiert. In einer Einheit ADD wird dem seriellen, digitalen Übertragungsblock Σtb ein Zeitintervall bzw. ein Prefix cp vorangestellt und nach einer Digital-Analog-Wandlung durch einen Digital-Analog-Wandler DAC als analoges Übertragungssignal x(t) an einen Übertragungskanal bzw. das Übertragungsmedium - nicht dargestellt - gesendet. Das Prefix cp stellt ein Schutzintervall zwischen zeitlich aufeinanderfolgenden Übertragungsblöcken tb dar und enthält eine vorgegebene Anzahl von Abtastwerten des vorhergehenden Übertragungsblocks tb.

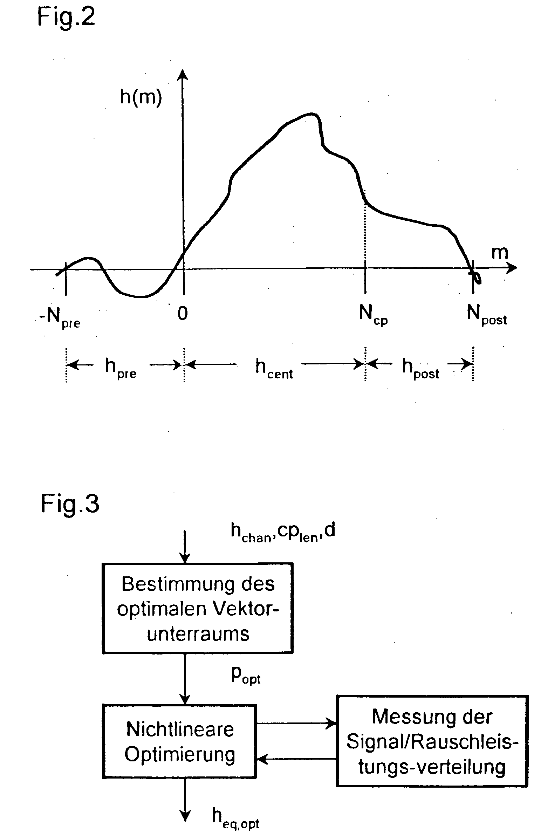

Fig.3 zeigt des weiteren im Empfängerzweig schematisch die Wirkungsweise der Adaption eines nach dem erfindungsgemäßen Verfahren wirkenden Zeitbereichsentzerrers TEQ. Die Adaption wird in einer Adaptionseinheit ADP - siehe Fig. 1 - durchgeführt, wobei für die Ermittlung vorzugsweise Signalprozessoren eingesetzt werden. Beim erfindungsgemäßen Verfahren werden für die Adaption grundsätzlich geschätzte Kanalimpulsantworten $h_{chan}$ verwendet, wobei diese mit Hilfe eines geeigneten Schätzverfahrens - beispielsweise der Methode des kleinsten quadratischen Fehlers wie in Golub,van Loan: Matrix Computations, John Hopkins University Press, 1996, Seite 236 beschrieben - ermittelt werden.

Eine Impulsantwort $h_{chan}$ für einen Übertragungsblock tb kann, wie in Fig. 2 dargestellt, grundsätzlich in drei Teilimpulsantworten zerlegt werden:

-    ein zentraler Impulsantwortteil $h_{cent}$, dessen Länge gleich der Länge des um einen Abtastwert erweiterten Prefix cp entspricht,
-    ein Vorläuferimpulsantwortteil $h_{pre}$ und
-    ein Nachläuferimpulsantwortteil $h_{post}$.

Für die Modellierung des Vorläuferimpulsantwortteils $h_{pre}$ und des Nachläuferimpulsantwortteils $h_{post}$ aus der Kanalimpulsantwort $h_{chan}$ ist jeweils ein Verzögerungsmodul $Z^{Npre}$, $Z^{-Npost}$ vorgesehen - siehe Fig. 1. Der zentrale Impulsantwortteil $h_{cent}$ trägt positiv zum Signal/Rauschverhältnis bei, d.h. erhöht das Signal/Rauschverhältnis, während der Vorläuferimpulsantwortteil $h_{pre}$ und der Nachläuferimpulsantwortteil $h_{post}$ das Signal/Rauschverhältnis reduzieren.

Während der Initialisierungsphase wird die geschätzte Kanalimpulsantwort $h_{chan}$, d.h. werden alle drei Impulsantwortteile $h_{cent}$, $h_{pre}$, $h_{post}$ als Grundlage für die Adaption, d.h. für die Ermittlung der Koeffizienten des Transversalfilters des Zeitbereichsentzerrers TEQ herangezogen - siehe auch Fig. 3. Aus diesen drei geschätzten Impulsantwortteilen $h_{cent}$, $h_{pre}$, $h_{post}$ können jene Matrizen abgeleitet werden, deren Eigenvektoren einen relativ kleindimensionalen (d=2 bis 4) optimalen Vektorunterraum $p_{opt}$ die für die Ermittlung der Koeffizienten $h_{eq,opt}$ des zu adaptierenden Transversalfilters (k=32-64) festlegen. Dieser optimale Vektorunterraum $p_{opt}$ wird einmalig bei Aktivierung eines gegebenen physikalischen Übertragungskanals bzw. eines Übertragungsmediums bzw. zu Beginn einer Datenübertragung ermittelt und bleibt während der Datenübertragung unverändert. Für die Ermittlung des Vektorunterraums $p_{opt}$ kann vorteilhaft die orthogonale Vektoriteration wie beispielsweise in Golub,van Loan: Matrix Computations, John Hopkins University Press, 1996, Seite 332 beschrieben, angewandt werden. Eingangsparameter für die Adaption sind hierbei die Länge des zyklischen Prefix $cp_{len}$, die geschätzte Kanalimpulsantwort $h_{chan}$, und die Dimension d des zu ermittelnden Vektorunterraums $p_{port}$. Der optimale Vektorunterraum $p_{opt}$ wird für eine an-

schließende nichtlineare Optimierung durch Basisvektoren $e_k$ - deren Länge der Anzahl der Transversalfilterkoeffizienten entspricht - dargestellt, d.h. die bei der nichtlinearen Optimierung in Betracht gezogenen Koeffizienten lassen sich mathematisch wie folgt beschreiben:

$$h_{eq}(n) = \sum_{k=1}^{d} a_k e_k(n)$$

Hierbei entspricht d der Dimension des Vektorunterraums und $a_k$ repräsentiert die noch zu optimierenden Koeffizienten. Die nichtlineare Optimierung im Vektorunterraum $p_{opt}$ erfolgt während der Datenübertragung laufend, d.h. die Adaption betrifft lediglich jene n Koeffizienten $a_{k,opt}$, welche für die Identifizierung eines Elements des Vektorunterraums $p_{opt}$ erforderlich sind. Die optimalen Koeffizienten des Transversalfilters TEQ sind also gegeben durch:

$$h_{eq,opt}(n) = \sum_{k=1}^{d} a_{k,opt} e_k(n)$$

Bei der nichtlinearen Optimierung der Vektorunterräume $p_{opt}$ werden die Einflüsse der additiven Störungen w(n) berücksichtigt. Desweiteren beeinflusst die Adaption des Zeitbereichsentzerrers TEQ auch das Signal/Rauschleistungsverhältnis. Um Instabilitäten aufgrund der Störungen w(n) und der Beeinflussung bei der Adaption des Zeitbereichsentzerrers TEQ zu vermeiden, sind daher kleine Schrittweiten bei üblichen nichtlinearen Optimierungsverfahren sinnvoll.

Nach der zeitlichen Entzerrung der Kanalimpulsantwort $h_{chan}$ bzw. des Übertragungsblocks $\Sigma tb+cp$ im Zeitbereichsentzerrer TEQ wird in einer Einrichtung DROP das Prefix cp wieder entfernt. Mit Hilfe eines Serien/Parallel-Wandlers SPC werden die Übertragungsblöcke Stb wieder in n zeitdiskrete Abtastwerte zerlegt und anschließend durch eine Fourieranalyse FFT (Fast Fourier Transformation) in die n frequenzdiskreten Subsymbole nfb transformiert. Im Frequenzebereich können mit Hilfe eines Frequenzbereichsentzerrers FEQ die die n Trägerfrequenzen repräsentierenden Subsymbole entzerrt werden. Mit Hilfe eines nachgeschalteten Decodierers DEC werden die in den n Trägerfrequenzen enthaltenen Informationen decodiert und zu einem Bitstrom bs zusammengefasst.

Im Rahmen der Decodierung der Subsymbole wird eine Messung des Signal/Rauschleistungs-Verhältnis SNR in einer mit dem Decodierer verbundenen Signaleinheit SNR durchgeführt. Das Signal/Rauschleistungs-Verhältnis SNR wird über einen Schalter S der Adaptionseinheit ADP zugeführt, in der die Filterkoeffizienten $h_{eq,opt}$ für den Zeitbereichsentzerrer TEQ ermittelt werden. Das Signal/Rauschleistungs-Verhältnis SNR wird für die Ermittlung der Filterkoeffizienten $h_{eq,opt}$ während der Datenübertragung, d.h. nach der Initialisierungsphase, in das Optimierungsverfahren einbezogen. Während der Initialierungsphase, d.h. zu Beginn einer Datenübertragung, wird der zentrale Impulsantwortteil $h_{cent}$ in das Optimierungsverfahren einbezogen, wodurch die Filterkoeffizienten $h_{eq,opt}$ für eine maximale Übertragungsgeschwindigkeit ermittelt werden. Entsprechend der aktuellen Übertragungsphase - Beginn oder bei laufender Datenübertragung - wird mit Hilfe des Schalters S entweder das Signal/Rauschleistungs-Verhältnis SNR oder der zentrale Impulsantwortteil $h_{cent}$ an die Adaptionseinheit ADP geschaltet.

Die Anwendung des erfindungsgemäßen Verfahrens ist nicht auf das vorhergehend beschriebene Ausführungsbeispiel beschränkt, sondern kann bei allen Übertragungsverfahren eingesetzt werden, bei denen aus einer Kanalimpulsantwort $h_{chan}$ ein umfangreicher, mehrdimensionaler Vektorraum ermittelt wird und aus dem für eine Optimierung eines Zeitbereichsentzerrers eine möglichst geringe Anzahl von Filterkoeffizienten ermittelt werden soll. Hierbei können unterschiedliche Optimierungsverfahren zur Bestimmung des Vektorunterraums bzw. des Eigenwertproblems und auch für die nichtlineare Optimierung des Vektorunterraums verwendet werden.

**Patentansprüche**

1. Verfahren zur Bestimmung der Filterkoeffizienten eines digitalen Transversalfilters (TEQ) zum Entzerren eines über ein dispersives Übertragungsmedium übermittelten Multiträgerfrequenz-Signals (x(t)), wobei der Transversalfilter (TEQ) eine vorbestimmte Länge (k) aufweist, welche die Dimension eines Vektorraums für eine Matrix in dem Vektorraum, welche alle Filterkoeffizienten des Transversalfilters enthält, festlegt mit folgenden Schritten:

   a) im Rahmen einer Initialisierungsprozedur zu Beginn der Übertragung des Multifrequenz-Signals (x(t))

   - Ermitteln eines optimalen Vektorunterraum ($p_{opt}$) des Vektorraums als Lösung eines Teil-Eigenproblems des Vektorraums basierend auf einer ermittelten Impulsantwort ($h_{chan}$) zum Multiträgerfrequenzsignal (x(t));
   - Darstellen dieses Vektorunterraums ($p_{opt}$), der alle Filterkoeffizienten für unterschiedliche Störsignale (w(n)) umfasst, durch eine orthogonale Basis (e), und
   - Ermittlung von optimalen Filterkoeffizienten, wobei sich die zu optimierenden Koeffizienten ($a_k$) unter Verwendung der ortho-

gonalen Basis (e) als

$$h_{eq}(n) = \sum_{k=1}^{d} a_k e_k(n)$$

ausdrücken lassen, wobei d der Dimension des Vektorunterraums entspricht;

    b) während der Datenübertragung des Multifrequenz-Signals (x(t))

       - Nachjustieren der Filterkoeffizienten ($a_{k,opt}$), in Abhängigkeit von dem aktuell geschätzten Störsignal (w(n)).

**2.** Verfahren nach einem der Anspruch 1, **dadurch gekennzeichnet,** **dass** die Filterkoeffizienten ($a_{k,opt}$) aus dem Vektorunterraum ($p_{opt}$) durch ein nichtlineares Optimierungsverfahren ermittelt werden, wobei für die nichtlineare Optimierung das Signal/ Rauschverhältnis (SNR) für jede Trägerfrequenz bestimmt wird.

**3.** Verfahren nach Anspruch 2, **dadurch gekennzeichnet,** **dass** das nichtlineare Optimierungsverfahren

    - während der Initialisierungsprozedur auf eine Maximierung der Übertragungsgeschwindigkeit und
    - nach der Initialisierungsprozedur auf ein maximales Signal/Rauschverhältnis (SNR)

abgestimmt ist.

**4.** Verfahren nach einem der vorhergehenden Ansprüche, **dadurch gekennzeichnet,** **dass** der eine Lösung des Teil-Eigenproblems repräsentierende Eigenvektorunterraum durch ein orthogonales Iterationsverfahren berechnet wird.

**5.** Verfahren nach einem der vorhergehenden Ansprüche, **dadurch gekennzeichnet, dass** während der Initialisierungsphase ein zentraler Impulsantwortteil ($h_{cent}$) in das Optimierungsverfahren mit einbezogen wird.

**6.** Verfahren nach einem der vorhergehenden Ansprüche , **dadurch gekennzeichnet, dass** während der Initialisierungsphase ein zentraler Impulsantwortteil ($h_{cent}$), ein Vorläuferimpulsanteil ($h_{pre}$) und ein Nachläuferimpulsanteil ($h_{post}$) in das Optimierungsverfahren mit einbezogen wird.

**7.** Verfahren nach einem der vorhergehenden Ansprüche, **dadurch gekennzeichnet, dass** während der laufenden Übertragung das Signal-zu Rauschen Verhältnis in das Optimierungsverfahren mit einbezogen wird.

**8.** Übertragungsverfahren für Multiträgersignale (x(t)), bei dem ein digitales Transversalfilter (TEQ) verwendet wird, dessen Filterkoeffizienten gemäß dem Verfahren nach Ansprüchen 1 bis 7 festgelegt werden.

**9.** Digitales Transversalfilter (TEQ) mit Filterkoeffizienten, welche gemäß einem Verfahren nach Anspruch 1 bis 7 festgelegt sind.

**10.** Empfänger zur Anwendung in einem Übertragungsverfahren für Multiträgersignale mit einem Transversalfilter (TEQ) nach Anspruch 9, einer Adaptionseinheit (ADP) zur Ermittlung der Filterkoeffizienten, einem Schalter (S) mit einer Signaleinheit (SNR) zur Ermittlung eines Signal/Rauschleistungsverhältnis, wobei an die Adaptionseinheit (ADP) mit Hilfe des Schalters (S) entweder in der Initialisierungsphase das Signal/Rauschleistungsverhältnis aus der Signaleinheit (SNR)geschaltet ist oder bei laufender Datenübertragung ein zentraler Impulsantwortteil ($h_{cent}$).

## Claims

**1.** Method for determining the filter coefficients of a digital transversal filter (TEQ) for equalization of a multicarrier frequency signal (x(t)) which is transmitted via a dispersive transmission medium, wherein the transversal filter (TEQ) has a predetermined length (k) which defines the dimension of a vector space for a matrix in the vector space which contains all the filter coefficients of the transversal filter, comprising the following steps:

    a) in the context of an initialization procedure at the start of transmission of the multi-frequency signal (x(t))

       - determining an optimum vector subspace ($p_{opt}$) of the vector space as a solution of a partial eigen problem relating to the vector space on the basis of a determined impulse response ($h_{chan}$) to the multicarrier frequency signal (x(t));
       - representing said vector subspace ($p_{opt}$), which comprises all the filter coefficients for different disturbance signals (w(n)), by an orthogonal base (e), and
       - determining optimum filter coefficients, wherein the coefficients ($a_k$) to be optimized can be expressed using the orthogonal base (e) as

$$h_{eq}(n) = \sum_{k=1}^{d} a_k e_k(n) \ ,$$

wherein d corresponds to the dimension of the vector subspace;

b) during the data transmission of the multi-frequency signal (x(t))

- readjusting the filter coefficients ($a_{k,opt}$), as a function of the currently estimated disturbance signal (w(n)).

2. Method according to Claim 1, **characterized in that** the filter coefficients ($a_{k,opt}$) are determined from the vector subspace ($p_{opt}$) by means of a nonlinear optimization method, with the signal-to-noise ratio (SNR) being determined for each carrier frequency for the non-linear optimization.

3. Method according to Claim 2, **characterized in that** the non-linear optimization method is tuned

- to maximize the transmission rate during the initialization procedure, and
- to maximize the signal-to-noise ratio (SNR) after the initialization procedure.

4. Method according to one of the preceding claims, **characterized in that** the eigen vector subspace which represents one solution of the partial eigen problem is calculated by means of an orthogonal iteration method.

5. Method according to one of the preceding claims, **characterized in that** during the initialization phase a central impulse response element ($h_{cent}$) is included in the optimization method.

6. Method according to one of the preceding claims, **characterized in that** during the initialization phase a central impulse response element ($h_{cent}$) a precursor impulse element ($h_{pre}$) and a postcursor impulse element ($h_{post}$) are included in the optimization method.

7. Method according to one of the preceding claims, **characterized in that** in the course of transmission the signal-to-noise ratio is included in the optimization method.

8. Transmission method for multicarrier signals (x(t)) in which a digital transversal filter (TEQ) is used, the filter coefficients of which are defined in accordance with the method according to Claims 1 to 7.

9. Digital transversal filter (TEQ) having filter coefficients which are defined in accordance with a method according to Claims 1 to 7.

10. Receiver for application in a transmission method for multicarrier signals comprising a transversal filter (TEQ) according to Claim 9, an adaptation unit (ADP) for determining the filter coefficients, a switch (S) having a signal unit (SNR) for determining a signal/noise power ratio, wherein either in the initialization phase the signal/noise power ratio from the signal unit (SNR) or in the course of data transmission a central impulse response element ($h_{cent}$) is applied to the adaptation unit (ADP) with the aid of the switch (S).

**Revendications**

1. Procédé de détermination du coefficient de filtrage d'un filtre transversal (TEQ) numérique destiné à égaliser un signal à fréquence porteuse multiple (x (t)) transmis par l'intermédiaire d'un support de transmission dispersif, le filtre transversal (TEQ) présentant une longueur (k) prédéterminée, laquelle détermine la dimension d'un espace vectoriel pour une matrice dans l'espace vectoriel, laquelle contient tous les coefficients de filtrage du filtre transversal, comprenant les étapes suivantes :

a) dans le cadre d'une procédure d'initialisation réalisée au début de la transmission du signal à fréquence multiple (x (t))

- détermination d'un sous-espace vectoriel ($p_{opt}$) optimal de l'espace vectoriel en tant que solution d'un problème propre partiel de l'espace vectoriel sur la base d'une réponse impulsionnelle ($h_{chan}$) déterminée au signal à fréquence porteuse multiple (x (t)) ;
- représentation de ce sous-espace vectoriel ($p_{opt}$), qui comprend tous les coefficients de filtrage pour différents signaux parasites (w (n)), par une base orthogonale (e), et
- détermination de coefficients de filtrage optimaux, les coefficients ($a_k$) à optimiser pouvant être exprimés, en utilisant la base orthogonale (e), en tant que

$$h_{eq}(n) = \sum_{k=1}^{d} a_k e_k(n) \ ,$$

d correspondant à la dimension du sous-espace vectoriel ;

b) pendant la transmission de données du signal à fréquence multiple (x (t))

- réajustement des coefficients de filtrage ($a_{k,opt}$) en fonction du signal parasite momentanément estimé (w (n)).

2. Procédé selon la revendication 1, **caractérisé en ce que** les coefficients de filtrage ($a_{k,opt}$) provenant du sous-espace vectoriel ($p_{opt}$) sont déterminés au moyen d'un procédé d'optimisation non linéaire, le rapport signal/bruit (SNR) pour chaque fréquence porteuse étant déterminé pour l'optimisation non linéaire.

3. Procédé selon la revendication 2, **caractérisé en ce que** le procédé d'optimisation non linéaire,

- pendant la procédure d'initialisation, est adapté à un maximum de la vitesse de transmission et
- **en ce qu'**après la procédure d'initialisation, il est adapté à un rapport maximal signal/bruit (SNR).

4. Procédé selon l'une quelconque des revendications précédentes, **caractérisé en ce que** le sous-espace de vecteur propre représentant une solution du problème propre partiel est calculé au moyen d'un procédé d'itération orthogonal.

5. Procédé selon l'une quelconque des revendications précédentes, **caractérisé en ce que** pendant la phase d'initialisation, une partie de réponse impulsionnelle ($h_{cent}$) centrale est prise en compte dans le procédé d'optimisation.

6. Procédé selon l'une quelconque des revendications précédentes, **caractérisé en ce que** pendant la phase d'initialisation, une partie de réponse impulsionnelle ($h_{cent}$) centrale, une partie impulsionnelle de précurseur ($h_{pre}$) et une partie impulsionnelle de poursuiveur ($h_{post}$) sont prises en compte dans le procédé d'optimisation.

7. Procédé selon l'une quelconque des revendications précédentes, **caractérisé en ce que** pendant que la transmission est en cours, le rapport signal/bruit est pris en compte dans le procédé d'optimisation.

8. Procédé de transmission pour des signaux à porteurs multiples (x(t)), dans lequel un filtre transversal (TEQ) numérique est utilisé dont les coefficients de filtrage sont déterminés selon le procédé suivant les revendications 1 à 7.

9. Filtre transversal (TEQ) numérique à coefficients de filtrage, lesquels sont déterminés suivant un procédé selon les revendications 1 à 7.

10. Récepteur destiné à l'utilisation dans un procédé de transmission pour signaux porteurs multiples, comprenant un filtre transversal (TEQ) selon la revendication 9, une unité d'adaptation (ADP) pour la détermination des coefficients de filtrage, un commutateur (S) muni d'une unité de signalisation (SNR) destinée à déterminer un rapport signal/puissance de bruit, le rapport signal/puissance de bruit provenant de l'unité de signalisation (SNR) étant commuté à l'unité d'adaptation (ADP) à l'aide du commutateur (S) pendant la phase d'initialisation ou une partie de réponse impulsionnelle ($h_{cent}$) étant commutée lorsque la transmission de données est en cours.

Fig. 1

EP 1 273 146 B1

## Fig.2

$$h(m)$$

$-N_{pre}$   0   $N_{cp}$   $N_{post}$   m

$\leftarrow h_{pre} \rightarrow$ $\leftarrow h_{cent} \rightarrow$ $\leftarrow h_{post} \rightarrow$

## Fig.3

$h_{chan}, cp_{len}, d$

Bestimmung des optimalen Vektor-unterraums

$p_{opt}$

Nichtlineare Optimierung

Messung der Signal/Rauschleis-tungs-verteilung

$h_{eq,opt}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0946025 A2

**In der Beschreibung aufgeführte Nicht-Patentliteratur**

- **AL-DHAHIR.** Optimum Finite-Length Equalization for Multicarrier Transceiver. IEEE, 1996, 56-64
- **VAN BLADEL ; MOENECLAY.** Time-Domain Equalizer for Multicarrier Communication. IEEE, 1995, 167-171
- **HENKEL ; KESSLER.** *Maximizing the Channel Capacity of Multicarrier Transmission by a Suitable Adaption Procedure for Time Domain Equalizer*
- **GOLUB,VAN LOAN.** Matrix Computations. John Hopkins University Press, 1996, 236
- **GOLUB,VAN LOAN.** Matrix Computations. John Hopkins University Press, 1996, 332